(19) Europäisches Patentamt

European Patent Office

Office européen des brevets

(11) **EP 2 802 062 A1**

(12) **EUROPEAN PATENT APPLICATION**

(43) Date of publication:
**12.11.2014 Bulletin 2014/46**

(51) Int Cl.:
*H02K 1/18* (2006.01)      *H02K 1/27* (2006.01)
*H02K 1/30* (2006.01)      *H02K 7/18* (2006.01)

(21) Application number: **13002449.0**

(22) Date of filing: **08.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Phase Motion Control S.p.A.**
**16141 Genova (IT)**

(72) Inventor: **Venturini, Marco**
**16145 Genova (GE) (IT)**

(74) Representative: **Monti, Umberto**
**Via Washington 48**
**20146 Milano (IT)**

(54) **An electric generator for a wind power generator**

(57)    In a wind generator, an electric generator (1) comprises a fixed supporting structure (2), a double stator (3, 4) mounted on said fixed supporting structure (2), a rotatable support (5) coaxially rotating with said stator (3, 4), and a double rotor (6, 7) mounted on said rotatable support (5).

The stator (3, 4) comprises a plurality of adjacent stator segments (12), each comprising two rows of polar expansions (15, 16), each polar expansion (15) of one row being arranged in front of a corresponding polar expansion (16) of the other row.

The rotor (6, 7) is annulus-shaped and mounted on said rotatable support (5), arranged in the space between the two rows of polar expansions (15, 16) to define a double axial air gap (23, 24), and comprises a plurality of magnetic dipoles (36).

The magnetic dipoles (36) comprise support members (37) of a ferromagnetic material mounted on said rotatable support (5) radially extending from the rotatable support (5), and pairs of permanent magnet plates (38, 39) with opposite polarity, the two plates (38, 39) of each magnetic dipole (36) being mounted on opposite faces of the corresponding support member (37), so that each one of said plates (38, 39) faces a respective air gap of the axial air gaps (23, 24).

FIG.2

EP 2 802 062 A1

# Description

The present invention relates to an electric generator for a wind power generator also known as eolic generator.

Particularly, the present invention finds advantageous, but not exclusive application, in wind power generators comprising the so called horizontal axis wind turbine for the production of high power electric energy, and the description that follows will make reference to this situation, without this being to be construed as a limit for the invention.

High power eolic generators are machine capable to convert the wind kinetic energy into electric energy up to a power of a few megawatts. An eolic generator typically includes an electric generator kinematically coupled to an eolic turbine. Usually the electric generator is a radial airgap generator comprising a stator with distributed imbricated windings. In order to insure a greater reliability, the electric generator is directly coupled to the eolic turbine, i.e, without intermediate overgears. As a consequence, the electric generator must operate at a low speed of rotation.

The large electric power requested, together with the low speed of rotation, dictate a relevant resistant torque of the electric generator, and therefore quite a large diameter and a high mechanical rigidity. As a general rule, in order to obtain a high mechanical rigidity it is necessary an oversizing of the various parts of the supporting mechanic of the generator, with consequent increase of the overall mass of the generator.

On the other hand, the mass and the diameter of the generator must be reasonably limited in view of their cost and, above all, of the generator transportability, since this latter has to be raised - together with the respective eolic turbine - to the top of a tower that can be as tall as tens of meters.

Several suggestions have been proposed to solve this problem, for example, WO 2011/034336 A2 discloses a PM generator using the technique of flux-concentrating iron cores and of the transverse flux. This method, although largely studied, nevertheless brings about large losses of magnetic flux due to the use of tortuous ferromagnetic paths between the magnets and the armature.

FR 2 926 935 A1 discloses a generator with double axial airgap in which the stator carrying the windings is positioned between two rows of facing magnets. This solution implies serious cooling problems and the strong magnetic attractions existing between stator and magnets at both sides tends to cause an unbalance at one or at the other end of the stator.

In general, many manufacturers have proposed segmented solutions such as in US2011/042957 A1; nevertheless all these solutions do not face the important problem of the magnetic stresses on the structure.

The object of the present invention is to provide an electric generator for an eolic generator, which electric generator avoids the above disclosed drawbacks, and more precisely that is both capable of reducing the electromagnetic forces mutually acting between the magnetic rotor and the stator structure, while at the same time providing an easy and economic manufacturing.

The invention is based on the fact that the amount of the forces acting between the magnetic rotor and the stator structure considerably determines the sizing, and therefore the practicality and the cost, of the mechanical supporting structure of the generator. Moreover, the mass of the mechanical structure of the generator, that according to the current practice largely overcomes that of the magnetically active parts, besides representing a cost by itself, also affects the structure and the cost of the whole eolic plant, both in respect of its realization and of its installation.

According to the present invention, these objects are achieved through an electric generator for a wind power generator as claimed in claim 1. Further advantageous characteristics are recited in the dependent claims.

For a better understanding of the present invention, a preferred embodiment thereof is now disclosed, only as a non limiting example and with reference to the attached drawings, in which:

- Figure 1 is a perspective view of an electric generator realized according to the principle of the present invention;
- Figure 2 is a cross-sectional view of the electric generator of Figure 1 taken along a symmetry plane containing the rotor rotation axis of the electric generator;
- Figure 3 is a cross-sectional view of a portion of the electric generator of Figure 1 taken along a symmetry plane containing the rotor rotation axis of the electric generator;
- Figure 4 shows in greater detail a portion of the stator of the electric generator of Figure 1;
- Figure 5 shows a detail of the stator portion of Figure 4;
- Figure 6 shows the polar expansions of the stator portion shown in Figure 4;
- Figure 7 shows in greater detail the rotor of the electric generator shown in Figure 1; and
- Figure 8 shows a magnetic dipole of the rotor of Figure 7.

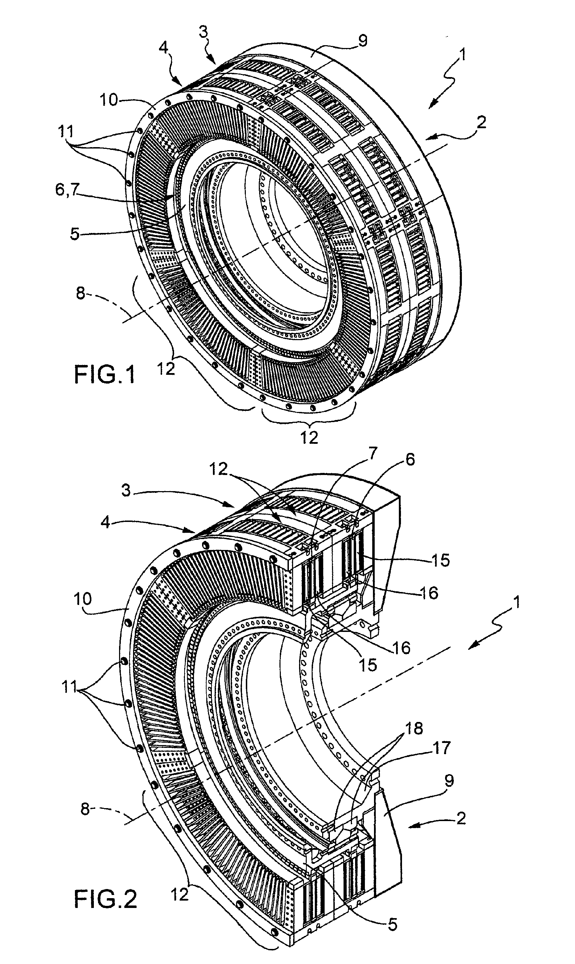

In Figure 1, reference 1 generally indicates an electric generator assembly for an eolic generator according to the present invention. The generator 1 comprises a fixed supporting structure 2, a double stator 3, 4 mounted on the supporting structure 2, a substantially cylindrical rotatable (rotating) support coaxially arranged with respect to the double stator 3, 4, and a permanent-magnets double rotor 6, 7 (better illustrated in Figure 2) mounted on the rotatable support 5.

The rotation axis of the rotatable (rotating) support is indicated by 8. The rotatable support 5 is directly coupled and coaxial to an eolic turbine (not shown) to form a wind generator.

With reference again to Figure 1, the double stator includes two stators 3 and 4, of equal diameters, rigidly secured to the supporting structure 2 so as to be coaxial and adjoining to one other, i.e. located one above the other along the direction of the axis 8. More particularly, the supporting structure 2 comprises a back flat ring 9 and a front flat ring 10, and the stators 3 and 4 are stacked and pressure clamped between the two rings 9 and 10 through locking pins 11 fitted in through holes formed in the rings 9 and 10 and in the carcass of the stators 3 and 4.

Each stator 3, 4 comprises a plurality of stator segments 12 adjacent to one other and with a properly curved shape so as to impart the shape of an annulus to each of the stators 3, 4. Along an axial direction, i.e. parallel to the axis 8, each segment 12 of the stator 3 overlaps a corresponding stator segment 12 of the stator 4. In the embodiment shown in Figure 1, there are six stator segments for each stator 3, 4, all indicated by the same numeral reference 12.

With reference to Figure 2, each stator segment 12 comprises two rows of polar expansions or pole pieces 15 and 16. Between the polar expansions 15, 16 of each row there are located radial through slots, i.e. extending perpendicularly to the axis 8 (not shown in Figure 2), for housing the stator windings. Each polar expansion 15 is formed through shearing from a pack of sheet irons with the stacking direction parallel to the axis 8. In respect of a direction parallel to the axis 8, each polar expansion 15 of a row faces a corresponding polar expansion 16 of the other row.

The double rotor comprises two rotors 6 and 7, each shaped as an annulus, with equal diameters and mounted on the rotatable support 5 along corresponding assembly circumferences in such a way that each rotor 6, 7 is located in the space between the row of polar expansions 15 and the row of polar expansions 16 of a stator 3, 4 to define a double axial air gap. For axial air gap it is meant an air gap through which the magnetic field lines extend parallel to the axis 8.

The rotatable support 5 rotates inside the annulus defined by the double stator 3, 4, and the two rotors 6 and 7 radially extend toward the outside, i.e. in a direction moving away from the axis 8. The supporting structure 2 comprises a cylindrical support 17 fixed to the back ring 9, and the rotatable support 5 is mounted on the cylindrical support 17 through a double frame ball bearing 18.

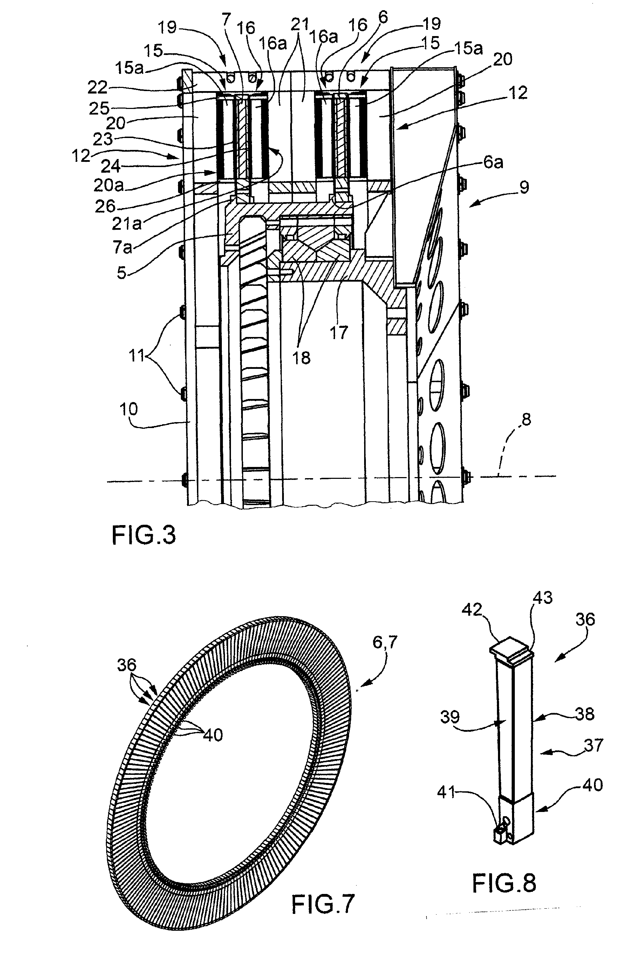

With reference to Figure 3, the assembly circumferences of the rotors 6 and 7 are defined, for example, by corresponding circular ribs 6a and 7a protruding from the surface of the rotatable support 5. Each stator segment 12 comprise a carcass 19 of a non magnetic (amagnetic) material having a U-shaped cross section that is open toward the axis 8, the cross section resulting from an intersection with a plane containing the axis 8. The carcass 19 comprises two side walls 20 and 21 and a spacing member 22 for keeping the side walls 20 and 21 spaced apart at a given distance. Both side walls 20 and 21 have the same thickness, are parallel to one another and provide for inner faces 20a and 21a, with a row of polar expansions 15, 16 fixed on each face and located in the space between the side walls 20 and 21 of the carcass 19.

Figure 3 shows the walls of the teeth 15a and 16a of two polar expansions 15 and 16. The double axial air gap comprises a first axial air gap 23 between a face of the rotor 6, 7 and the polar expansions 15 fixed to the side wall 20, and a second axial air gap 24 between the opposite face of the rotor 6, 7 and the polar expansions 16 fixed to the other side wall 21. For clarity in the Figure there are not shown the stator windings wound around the teeth 15a and 16a. For each row of polar expansions 15, 16, each stator segment 12 comprises two layers of epoxy resin 25 and 26 closing the slots between the polar expansions 15, 16 on the lower and upper parts, with the purpose of sealingly enclosing the stator windings wound around the teeth 15a and 16a.

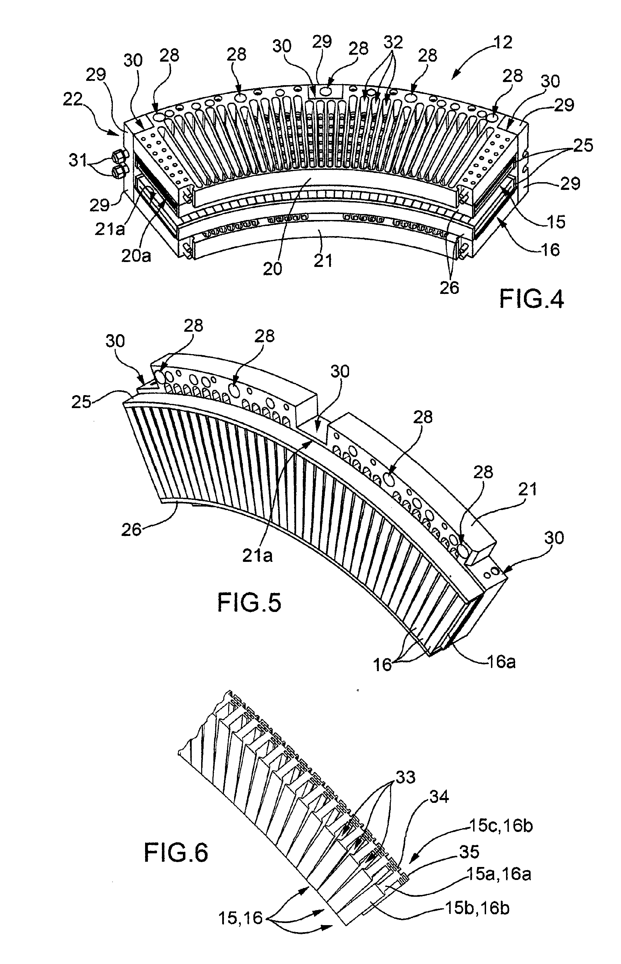

Figure 4 shows a single stator segment 12 without the associated rotor 6, 7 between the polar expansions 15, 16. The side walls 20 and 21 of the carcass 19 of each stator segment 12 have the shape, in plant, of an annulus sector whereby an annulus is formed by assembling a proper number of adjoining segments 12 (Figure 1). The shape of the spacing member 22 is substantially that of an arc and the member is located between the two side walls 20 and 21 to maintain these latter at a mutual distance.

Each side wall 20, 21 exhibits a plurality of through holes 28 and is arranged so that such holes 28 are coaxial to as many through holes (not shown) of the spacing member 22 to allow the passage of locking pins 11 (Figure 1). The spacing member 22 comprise three pairs of transverse teeth 29 adapted to be coupled with corresponding pairs of notches 30 in the side walls 20 and 21 for assembling the carcass 19 and aligning the holes 28. The assembling of the stator segments 12 to form the double stator 3, 4 is accomplished by joining the spacing members 22 between them at their longitudinal ends by means of tightening bolts 31 to form two rings of segments 12, by stacking the two rings of segments 12 with the side walls 21 of one ring in contact with the side walls 21 of the other ring, by inserting the locking pins 11 into the holes 28 and clamping the two rings 9 and 10 around the two rings of segments 12 by means of nuts screwed to the threaded ends of the locking pins 11.

Figure 5 shows a half of a stator segment 12, and in this particular case it shows only the wall 21 and the corresponding polar expansions 16 with the layers of epoxy resin 25 and 26 closing the corresponding slots.

With reference to Figures 4 and 5, each side wall 20, 21 of the carcass 19 comprises a row of slits 32 formed on the outer surface of the wall 20, 21, uniformly distributed along the arc of the wall 20, 21 and oriented according to respective radial directions, i.e. perpendicularly to the axis 8. Each slit 32 radially extends for most of the height of the wall 20, 21. The slits 32 serve to lighten the carcass 19, but also to allow the circulation of air for cooling the air gaps 23 and 24. Moreover, each side wall 20, 21 comprise at least an inside recess (not shown) for the circulation of a cooling fluid, capable of absorb the heat of the air circulating along the slits 32 and, therefore facilitate the cooling of the stators 3 and 4.

With reference to Figure 6, that shows a portion of the row of polar expansions 15, 16 without the carcass 19 and the corresponding layers of epoxy resin 25 and 26, the cross section of each polar expansion 15, 16 formed by an intersecting plane parallel to the axis 8, has substantially an H shape and is formed by laminated material packed (stacked) along an axial direction. The polar expansions 15, 16 alternate with slits 33 that are substantially closed along the axial direction (i. e. parallel to the axis 8) between the heads 15b, 16b facing the axial air gaps 23, 24 and the bases 15c, 16c fixed to the corresponding side wall 20, 21 (Figure 5) of the polar expansions 15, 16. The base 15c, 16c of each polar expansion 15, 16 comprises two comb-shaped portions 34 and 35, complementary to one another, with corresponding teeth protruding parallel to the wall 20, 21 on opposite sides of the corresponding tooth 15a, 16a. This way, by forcibly joining together the comb portions 34 with the comb portions 35 between adjacent polar expansions 15, 16, it is possible to mount the polar expansions 15, 16 along a line after the stator windings (not shown) have been wound around the teeth 15a, 16a.

The stator windings are concentrated windings, that is they comprise, for each polar expansion 15, 16, a winding wound around the corresponding tooth 15a, 16a. Advantageously, each winding is formed by a copper sheet winding, with the sheet having a height equal to the length of the tooth 15a, 16a. The copper sheet winding allows a filling of the slits 33 up to 70%. An increased filling allows for building slits 33 that are shorter in the radial direction, and therefore allows to reduce the mass of the stator segments 12 while reducing at the same time the inductance of the windings, and therefore the associated voltage drop. The output terminals of each sheet winding are formed, for example, by copper strips of a type known as bus bars.

According to the invention and with reference to Figures 7 and 8, each rotor 6, 7 comprise a corresponding plurality of magnetic dipoles 36, which are mounted on and uniformly distributed along the corresponding assembly circumference 6a, 7a (Figure 3) of the rotatable support 5 (not shown in Figures 7 and 8) and laterally separated from one another in the direction of the assembly circumference 6a, 7a to prevent the magnetic field lines from being closed without completely crossing both air gaps 23 and 24. In other words, the side separation between the magnetic dipoles 36 allows for preventing, or at least strongly limiting, that magnetic field lines are closed through the rotor 6, 7, i.e. through adjacent magnetic dipoles 36, and the generation of non-tangential forces between the rotor 6, 7 and the stator 3, 4.

Each magnetic dipole 36 comprises an elongated support member 37 of a ferromagnetic material (Figure 8) extending along a radial direction, that is perpendicular to the axis 8, and a corresponding pair of plates 38 and 39 of permanent magnet with surfaces of opposed polarity. The plates are applied on corresponding opposed faces of the support member 37, each facing a corresponding axial air gap 23 and 24. Each magnetic dipole 36 is fastened to the rotatable support 5 (not shown in Figure 7) through a fastening member 40 integral with an end of the support member 37. The fastening member 40 comprises at least a shaped slot 41 for the passage of a screw to be screwed to the rotatable support 5. Advantageously, the support member 37 is made of materials known as Soft Magnetic Composites (SMC) exhibiting mechanical characteristics similar to those of the compact iron and electromagnetic characteristics similar to those of a rolled material, and this allows for reducing eddy currents. Such a material is for instance available with the commercial name Somaloy®,

Preferably but not necessarily, the transverse cross section of the support member 37 and the fastening member 40 are squared. The transverse cross section of the fastening member 40 is larger than that of the support member 37 so that by assembling the magnetic dipoles 36 with the fixing supports 40 adjacent to one another along the assembly circumference 6a, 7a, there is formed a certain distance or gap between adjacent supporting member 37, in other words the magnetic dipoles 36 are physically separated from one another, and therefore side air gaps are present between adjacent magnetic dipoles 36 that are capable to create a magnetic reluctance larger than the one that can be measured through the support member 37 between the two- plates 38 and 39. In correspondence of the opposite end to the one integer with the fastening member 40, the support member 37 comprises a tooth 42 protruding from a side face of the support member 37, i.e from one of the two faces of the support member 37 transverse with respect to the faces provided with the plates 38 and 39, and a notch 43 with dimensions complementary to those of the tooth 42, this latter being formed starting from the side face opposite to that from which the tooth 42 protrudes. The tooth 42 of each support member 37 is adapted to be coupled with the notch 43 of an adjacent support member 37 whereby the magnetic dipoles 36 are aligned to one another along the assembly circumference 6a, 7a.

The assembling of the magnetic dipoles 36 in the above disclosed manner defines the annulus shape of the rotor 6, 7, as shown in Figure 7.

Additionally, each of the magnetic dipoles 36 is covered by a layer of carbon fibres (not shown) so as to realize a corresponding protective hull capable to increase the operation reliability of the electric generator 1. The covering is made possible by the physical separation between the magnetic dipoles 36. As a matter of fact, the magnetic dipoles 36 are firstly covered with the protective hull, and then they are fixed onto the rotatable support 5. According to a further embodiment of the present invention, (not illustrated since it can be directly deduced from what disclosed above) each rotor 6, 7 comprises a plurality of elements of amagnetic material alternated with the magnetic dipoles 36 along the assembly circumference 6a, 7a to separate the magnetic dipoles 36 from one another. More particularly, each amagnetic element is arranged between two corresponding adjacent magnetic dipoles 36 and it results adjacent to the two magnetic dipoles 36 for the whole length of the corresponding support members 37.

In the above disclosed embodiments, the generator 1, for each stator-rotor group, exhibits a relationship between the number of pairs of polar expansions 15, 16 and the number of magnetic dipoles 36 substantially comprised between 0.9 and 1.15. In the specific illustrated embodiment of Figures 1-8, each stator segment 12 has a number of pairs of polar expansions 15, 16, equal to 36, therefore each stator 3, 4 has a number of pairs of polar expansions 15, 16 equal to 216, and each rotor 6, 7 has a number of magnetic dipoles equal to 192.

Each stator winding generates a one-phase voltage that is out of phase by an angle Ae (as measured in electric degrees) with respect of the voltage of the adjacent winding, as given by the formula:

$$Ae = Am/E \cdot (P/2),$$

where Am is the round angle in mechanical degrees (360°), E is the number of pairs of polar expansions, and P is the number of magnetic dipoles. In the illustrated embodiment, the angle Ae is equal to 160 electric degrees, i.e. 180-20 electric degrees. Therefore, a three-phase voltage can be obtained by vectorially combining the single-phase voltages in groups of three antiseries windings, so as to cancel the 180 electric degrees phase displacement.

The main advantage of the above disclosed electric generator 1 resides in a smaller mass in respect of known electric generators of the same power. Such mass reduction is due to a combination of characteristics.

For example, the structure providing for a double axial air gap, allows to counterbalance the non tangential attractive forces acting between each rotor 6, 7 and the corresponding stator 3, 4. Moreover, in a rotor 6, 7 with magnetic dipoles 36 separated from one another through side air gaps or elements of an amagnetic material, the formation of magnetic field lines can be strongly limited, which magnetic field lines would otherwise be closed through the rotor 6, 7, i.e. through adjacent magnetic dipoles 36, thus generating non tangential forces between each rotor 6, 7 and the corresponding stator 3, 4 also in presence of a double axial air gap structure. This way the double axial air gap structure and the rotor with the separate magnetic dipoles do not impose an oversizing of the supporting structure 2 to compensate non tangential forces between stator 3, 4 and rotor 6, 7.

Thanks to the structure providing a double stator 3, 4 combined with a double rotor 6, 7 mounted on a double frame ball bearing 18, it become possible to reduce the distance between the ball bearing and the farthest point of the double axial air gap 23 and 24, and therefore to minimize the (demanded or specified) rigidity, of the whole structure of the electric machine. Otherwise stated, the deformations of such structure can be controlled with the minimum possible rigidity, since the amount of the deformations is given by the rigidity for the lever arm multiplied by the unbalancing forces. Of course minimizing the required rigidity means minimizing the weight of the whole structure of the electric generator. Finally, the sheet copper windings allow for a greater filling of the slits 33, and therefore shorter slits can be used with all the other requirements being unchanged. This brings about a reduction of the mass of the stator segments 12.

**Claims**

1. An electric generator for a wind power generator, said electric generator (1) comprising:

   a fixed supporting structure (2), at least one stator (3, 4) mounted on said fixed supporting structure (2), a rotatable support (5) coaxially rotating with said stator (3, 4), and at least one rotor (6, 7) mounted on said rotatable support (5);
   in which said at least one stator (3, 4) comprises a plurality of stator segments (12) adjacent to each other, each stator segment (12) comprising two rows of polar expansions (15, 16), wherein each polar expansion (15) of one row is arranged in front of a corresponding polar expansion (16) of the other row,
   in which said at least one rotor (6, 7) has the shape of an annulus and is mounted on said rotatable support (5), so as to be arranged in the space between the two rows of polar expansions (15, 16) to define a double axial air gap (23, 24),
   in which said rotor (6, 7) comprises a plurality of magnetic dipoles (36),
   each dipole being uniformly distributed along an assembly circumference (6a, 7a) of the rotatable support (5) and provided with two surfaces (38, 39) having opposite polarity and facing one of said two axial air gaps (23, 24),
   said dipoles being separated from one another along said circumference (6a, 7a), so as to prevent that the magnetic field lines close without completely passing through said double axial air gap (23, 24),

said electric generator (1) being **characterised in that**

said magnetic dipoles (36) comprise support members (37) made of a ferromagnetic material and mounted on said rotatable support (5) along said circumference (6a, 7a), so as to radially extend from the rotatable support (5), and pairs of permanent magnet plates (38, 39) with opposite polarity, the two plates (38, 39) of each magnetic dipole (36) being mounted on opposite faces of the corresponding support member (37), so that each one of said plates (38, 39) faces a respective air gap of the axial air gaps (23, 24).

2. The electric generator according to claim 1, wherein said magnetic dipoles (36) are distributed so as to leave lateral air gaps between them.

3. The electric generator according to claim 2, wherein said support members (37) of the magnetic dipoles (36) are made of a Composite Soft Magnetic material.

4. The electric generator according to claim 3, wherein each one of said magnetic dipoles (36) is coated with a carbon fibre layer.

5. The electric generator according to claim 1, wherein said rotor (6, 7) comprises a plurality of amagnetic elements, alternating with said magnetic dipoles (36) along said circumference (6a, 7a) so as to separate said magnetic dipoles (36) from one another.

6. The electric generator according to any of the claims from 1 to 5, wherein said stator segments (12) are curved so as to impart to said assembled stator (3, 4) the shape of an annulus; said rotatable support (5) being arranged for rotating inside the annulus defined by the stator (3, 4), and said rotor (6, 7) radially extending towards the outside from said rotatable support (5).

7. The electric generator according to any of claims 1 to 6, wherein each of said stator segments (12) comprises a plurality of windings, each consisting of a winding of copper sheet wound around the tooth (15a, 16a) of a corresponding one of said polar expansions (15, 16).

FIG.1

FIG.2

FIG.3

FIG.7

FIG.8

FIG.4

FIG.5

FIG.6

**Europäisches Patentamt**
**European Patent Office**
**Office européen des brevets**

# EUROPEAN SEARCH REPORT

Application Number

EP 13 00 2449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2011/077421 A2 (C & F TOOLING LTD [IE]; GOODFELLOW JOSEPH FRANCIS [IE]) 30 June 2011 (2011-06-30) * page 4, line 23 - page 6, line 22 * ----- | 1-7 | INV. H02K1/18 H02K1/27 H02K1/30 H02K7/18 |
| Y | US 2013/082545 A1 (GOTO KENGO [JP] ET AL) 4 April 2013 (2013-04-04) * paragraph [0111] - paragraph [0119] * ----- | 1-7 | |
| Y | US 2009/072639 A1 (SENEFF RICHARD LEX [US] ET AL) 19 March 2009 (2009-03-19) * paragraph [0038] - paragraph [0044] * ----- | 4,5 | |
| Y | US 2012/228965 A1 (BANG DEOK JE [KR] ET AL) 13 September 2012 (2012-09-13) * paragraph [0130] - paragraph [0134] * ----- | 6 | |
| Y | US 6 011 339 A (KAWAKAMI TSUKASA [JP]) 4 January 2000 (2000-01-04) * abstract * ----- | 7 | |
| A | WO 2010/040534 A2 (PRO DISKUS AG [CH]; SCHOTTDORF BERND [DE]; WEISSGERBER FRANZ [DE]) 15 April 2010 (2010-04-15) * abstract * ----- | 1-7 | TECHNICAL FIELDS SEARCHED (IPC) H02K |
| A | WO 01/06623 A1 (AERPAC HOLDING B V [NL]; ROELOFS ROBERT [NL]) 25 January 2001 (2001-01-25) * abstract * ----- | 1-7 | |

The present search report has been drawn up for all claims

| Place of search | Date of completion of the search | Examiner |
|---|---|---|
| Munich | 10 December 2013 | Frapporti, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 13 00 2449

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2013

| Patent document cited in search report | | Publication date | Patent family member(s) | | Publication date |
|---|---|---|---|---|---|
| WO 2011077421 | A2 | 30-06-2011 | NONE | | |
| US 2013082545 | A1 | 04-04-2013 | CN | 102948053 A | 27-02-2013 |
| | | | US | 2013082545 A1 | 04-04-2013 |
| | | | WO | 2011155022 A1 | 15-12-2011 |
| US 2009072639 | A1 | 19-03-2009 | US | 2009072639 A1 | 19-03-2009 |
| | | | WO | 2009038714 A1 | 26-03-2009 |
| US 2012228965 | A1 | 13-09-2012 | CN | 102725947 A | 10-10-2012 |
| | | | EP | 2479876 A2 | 25-07-2012 |
| | | | JP | 2013505697 A | 14-02-2013 |
| | | | KR | 100969682 B1 | 14-07-2010 |
| | | | US | 2012228965 A1 | 13-09-2012 |
| | | | WO | 2011034336 A2 | 24-03-2011 |
| US 6011339 | A | 04-01-2000 | AU | 7226996 A | 11-08-1997 |
| | | | EP | 0875091 A1 | 04-11-1998 |
| | | | US | 5986374 A | 16-11-1999 |
| | | | US | 6011339 A | 04-01-2000 |
| | | | WO | 9726700 A1 | 24-07-1997 |
| WO 2010040534 | A2 | 15-04-2010 | DE | 102008050806 A1 | 22-04-2010 |
| | | | EP | 2332236 A2 | 15-06-2011 |
| | | | WO | 2010040534 A2 | 15-04-2010 |
| WO 0106623 | A1 | 25-01-2001 | AU | 4624000 A | 05-02-2001 |
| | | | EP | 1181763 A1 | 27-02-2002 |
| | | | NL | 1011876 C2 | 24-10-2000 |
| | | | WO | 0106623 A1 | 25-01-2001 |

EPO FORM P0459

For more details about this annex : see Official Journal of the European Patent Office, No. 12/82

**EP 2 802 062 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011034336 A2
- FR 2926935 A1
- US 2011042957 A1